# EUROPÄISCHE PATENTSCHRIFT

(11) **EP 0 759 127 B1**
(45) Veröffentlichungstag und Bekanntmachung des Hinweises auf die Patenterteilung: **16.06.1999**
(21) Anmeldenummer: 95917298.2
(22) Anmeldetag: 07.04.1995
(51) Int. Cl.: F16D 65/16

(54) **BETÄTIGUNGSVORRICHTUNG FÜR EINE FAHRZEUGBREMSE, INSBESONDERE SCHEIBENBREMSE**
ACTUATOR FOR A VEHICLE BRAKE, PARTICULARLY A DISK BRAKE
DISPOSITIF D'ACTIONNEMENT D'UN FREIN DE VEHICULE, NOTAMMENT D'UN FREIN A DISQUE

(30) Priorität: 06.05.1994 DE 9407623 U
(43) Veröffentlichungstag der Anmeldung: 26.02.1997
(73) Patentinhaber: LUCAS INDUSTRIES PUBLIC LIMITED COMPANY, Solihull, West Midlands B91 3TX (GB)
(72) Erfinder: MEYER, Manfred, D-54558 Gillenfeld (DE)
(74) Vertreter: Goetz, Rupert, Dipl.-Ing.
(86) Internationale Anmeldenummer: EP9501274
(87) Internationale Veröffentlichungsnummer: WO9530842

(56) Entgegenhaltungen:
- EP-A- 0 402 835
- DE-A- 2 229 237
- DE-A- 3 405 027
- FR-A- 2 142 512

## Beschreibung

Die Erfindung betrifft eine Betätigungsvorrichtung für eine Fahrzeugbremse, insbesondere Scheibenbremse, mit
- einem Gehäuse, das einen Gehäuseboden aufweist,
- einer Welle, die im Gehäuseboden gelagert und für mechanische Bremsungen drehbar ist,
- einer gehäusefesten Rampenanordnung, die als ringförmige Platte ausgebildet, am Gehäuseboden rings um die Welle abgestützt und durch eine außermittig angeordnete Verdrehsicherung am Drehen gehindert ist, und
- einer drehbaren Rampenanordnung, die im Gehäuse axial verstellbar angeordnet und mit der Welle zur Übertragung eines Drehmoments verbunden ist und sich derart an der gehäusefesten Rampenanordnung abstützt, daß sie ein von der Welle auf sie ausgeübtes Drehmoment in eine axiale Betätigungskraft umsetzt.

Eine solche Betätigungsvorrichtung ist aus der EP-A-0 402 835 bekannt. Dort ist die gehäusefeste Rampenanordnung an einer zylindrischen Innenfläche des Gehäuses zentriert und mit Schrauben, die sich durch den Gehäuseboden hindurcherstrecken, verdrehsicher befestigt. Für diese Zentrierung der gehäusefesten Rampenanordnung ist es erforderlich, die zylindrische Innenfläche des Gehäuses sehr genau konzentrisch zur Lagerung der Welle zu bearbeiten; dadurch wird die Herstellung des Gehäuses verteuert. Im Betrieb der Bremse kann sich das Gehäuse infolge Erhitzung verziehen, und dadurch kann sich bei der bekannten Betätigungsvorrichtung die Zentrierung der gehäusefesten Rampenanordnung in bezug auf die Welle verschlechtern. Dies hat zur Folge, daß die an der gehäusefesten Rampenanordnung ausgebildeten, üblicherweise im wesentlichen kreisbogenförmigen Rampen eine exzentrische Stellung einnehmen, in der sie nicht mehr genau zu entsprechenden Rampen passen, die an der drehbaren Rampenanordnung ausgebildet sind. Wälzkörper, beispielsweise Kugeln, die üblicherweise zwischen den einander axial gegenüberliegenden Rampen angeordnet sind, stützen sich deshalb nicht mehr, wie vorgesehen, an Grundflächen sondern an seitlichen Flanken der Rampen ab. Dadurch entstehen zusätzliche Reibungsverluste, die Verschleiß hervorrufen und den Wirkungsgrad der Betätigungsvorrichtung verschlechtern.

Eine weitere Betätigungsvorrichtung der genannten Gattung ist aus der EP 0 403 635 B1 bekannt. Dort ist als exzentrische Verdrehsicherung für die gehäusefeste Rampenanordnung entweder ein durch Prägen erzeugter Zapfen vorgesehen, der in ein achsparalleles Sackloch im Gehäuseboden eingreift, oder ein achsparalleler Stift, der in ein Sackloch im Gehäuseboden eingeschlagen ist und in ein in radialer Richtung längliches Loch der gehäusefesten Rampenanordnung eingreift. In beiden Fällen erstreckt sich die Welle unmittelbar durch die als ringförmige Platte ausgebildete gehäusefeste Rampenanordnung hindurch, und diese stützt sich dementsprechend, nach Überwindung eines aus fertigungstechnischen Gründen unvermeidlichen Radialspiels, unmittelbar an der Welle ab, um das bei Betätigung der Bremse auf die gehäusefeste Rampenanordnung einwirkende Reaktionsmoment aufnehmen zu können. Dieses Reaktionsdrehmoment ist in erster Näherung proportional zu dem über die Welle eingeleiteten Betätigungsdrehmoment und kann eine Größe erreichen, bei der die Kraft, mit der sich die gehäusefeste Rampenanordnung an der Welle abstützt, einen erheblichen Reibungswiderstand gegen weitere Drehung der Welle hervorruft. Dadurch vermindert sich der Wirkungsgrad der bekannten Betätigungsvorrichtung beträchtlich. Die erst nach Überwindung eines Radialspiels stattfindende Abstützung der gehäusefesten Rampenanordnung an der Welle hat wiederum zur Folge, daß die an dieser Rampenanordnung ausgebildeten Rampen eine exzentrische Stellung einnehmen. Neben der dadurch entstehenden Reibung ruft auch die Reibung zwischen der gehäusefesten Rampenanordnung und der Welle Verschleiß hervor und verschlechtert den Wirkungsgrad der Betätigungsvorrichtung.

Der Erfindung liegt deshalb die Aufgabe zugrunde, eine Betätigungsvorrichtung der beschriebenen Gattung derart weiterzubilden, daß sie einen höheren Wirkungsgrad aufweist und weniger verschleißanfällig ist.

Die Aufgabe ist erfindungsgemäß dadurch gelöst, daß die gehäusefeste Rampenanordnung auf einer Lagerbüchse zentriert ist, mittels der die Welle im Gehäuseboden gelagert ist.

Damit wird erreicht, daß die drehbare Rampenanordnung, und somit auch die Welle, von Querkräften freigehalten wird, die bisher von der gehäusefesten Rampenanordnung auf sie übertragen worden sind. Die Zentrierung der gehäusefesten Rampenanordnung bleibt von jeglicher Ungenauigkeit der Gehäuseinnenwand unbeeinflußt und kann somit genauer sein als bei der bekannten gattungsgemäßen Betätigungsvorrichtung. Infolgedessen bleiben die in der gehäusefesten Rampenanordnung einerseits und in der drehbaren Rampenanordnung andererseits ausgebildeten Rampen besser in bezug zueinander zentriert und sind deshalb geringerem Verschleiß ausgesetzt, unabhängig davon, ob diese Rampen unmittelbar oder über zwischen ihnen angeordnete Wälzkörper paarweise zusammenwirken.

Durch die doppelte Nutzung der Lagerbüchse zur Lagerung der Welle einerseits und zur Zentrierung der gehäusefesten Rampenanordnung andererseits erhöhen sich die Kosten für die Herstellung und Montage der Lagerbüchse sowie der gehäusefesten Rampenanordnung im Vergleich zu der bekannten Betätigungsvorrichtung nicht; im Gegenteil ist es besonders einfach, die gehäusefeste Rampenanordnung außerhalb des Gehäuses auf die Lagerbüchse mit engem Sitz aufzuschieben oder aufzupressen, um dann beide gemeinsam in einem Arbeitsgang in das Gehäuse einzusetzen, wobei die Lagerbüchse ihrerseits in eine Bohrung im Gehäuseboden mit engem Sitz eingeschoben oder eingepreßt wird.

Dabei ist es besonders vorteilhaft, wenn die Lagerbüchse einen in die gehäusefeste Rampenanordnung eingreifenden Abschnitt kleineren Außendurchmessers und einen im Gehäuseboden aufgenommenen Abschnitt größeren Außendurchmessers aufweist.

Ein Ausführungsbeispiel der Erfindung wird im folgendem anhand schematischer Zeichnungen im Vergleich zum vorausgesetzten Stand der Technik näher erläutert. Es zeigen:
- Fig. 1: eine Teilbelag-Scheibenbremse mit einer erfindungsgemäßen Betätigungsvorrichtung im axialen Schnitt,
- Fig.2: einen vergrößerten Ausschnitt aus Fig.1,
- Fig.3: den Querschnitt III-III in Fig.2,
- Fig.4: einen der Fig.2 entsprechenden Ausschnitt einer bekannten Betätigungsvorrichtung und
- Fig.5: den Querschnitt V-V in Fig.4.

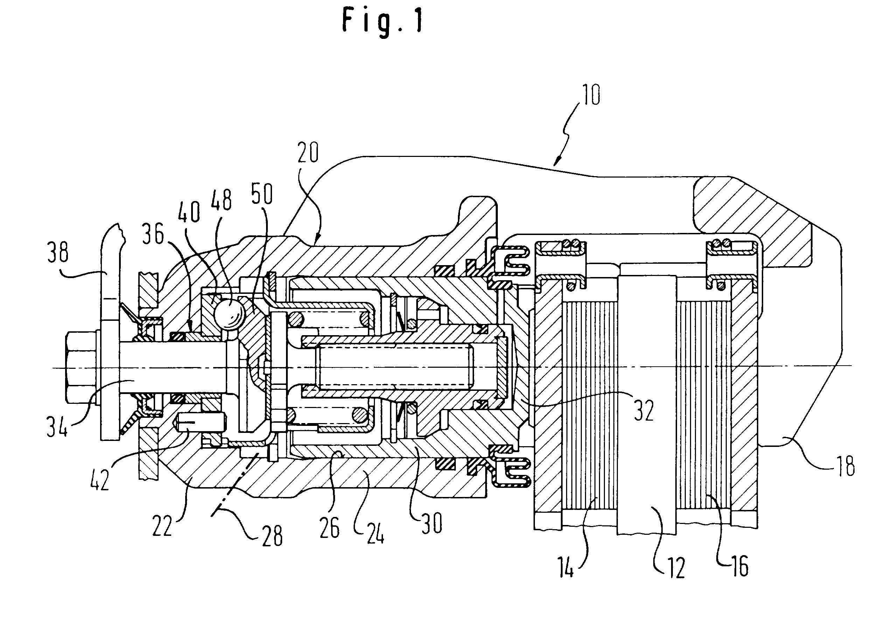

Die in Fig.1 bis 3 dargestellte Betätigungsvorrichtung ist in einen Schwimmsattel 10 eingebaut, der zu einer Teilbelag-Scheibenbremse gehört und an einem nicht dargestellten Bremsträger in üblicher Weise parallel zur Achse einer Bremsscheibe 12 verschiebbar geführt ist. Der Schwimmsattel 10 greift über die Bremsscheibe 12 sowie zwei Bremsbacken 14 und 16 hinweg, von denen die erste Bremsbacke 14 unmittelbar durch die Betätigungsvorrichtung an die Bremsscheibe 12 anlegbar ist; dadurch entstehen Reaktionskräfte, die den Schwimmsattel 10 derart verschieben, daß ein an ihm ausgebildeter Schenkel 18 die zweite Bremsbacke 16 ebenfalls an die Bremsscheibe 12 anlegt.

Zu der Betätigungsvorrichtung gehört ein in einem Stück hergestelltes, beispielsweise gegossenes Gehäuse 20 mit einem Gehäuseboden 22 und einem Gehäusemantel 24, in dem eine zur Bremsscheibe 12 offene Zylinderbohrung 26 sowie ein Einlaßkanal 28 zum Anschließen an einen Hauptbremszylinder ausgebildet sind. In der Zylinderbohrung 26 ist ein becherförmiger Kolben 30 geführt, der eine geschlossene äußere Stirnwand 32 mit einer Anlagefläche für die Bremsbacke 14 aufweist.

Im Gehäuseboden 22 ist gleichachsig mit dem Kolben 30 eine Welle 34 für mechanische Bremsbetätigungen in einer Lagerbüchse 36 drehbar und axial verschiebbar gelagert. Am äußeren Ende der Welle 34 ist ein Hebel 38 befestigt, der üblicherweise, beispielsweise mittels eines Bowdenzugs, mit einem Feststellbremshebel oder -pedal verbunden ist. An der Innenseite des Gehäusebodens 22 liegt eine gehäusefeste Rampenanordnung 40 in Gestalt einer ringförmigen Platte an, die auf die Lagerbüchse 36 aufgepreßt und an ihr in bezug auf das Gehäuse 20 zentriert ist, ohne die Welle 34 zu berühren. Die gehäusefeste Rampenanordnung 40 ist gegen Drehen durch eine Verdrehsicherung 42 gesichert. Diese ist im dargestellten Beispiel von einem Kerbnagel gebildet, der in eine Bohrung im Gehäuseboden 22 eingeschlagen ist und mit Radialspiel in ein außermittig angeordnetes Loch 44 in der gehäusefesten Rampenanordnung 40 eingreift.

An der gehäusefesten Rampenanordnung 40 sind drei in Umfangsrichtung langgestreckte, wannenartige Rampen 46 ausgebildet, die je einen im dargestellten Beispiel kugelförmigen Spreizkörper 48 aufnehmen. Die Spreizkörper 48 wirken mit je einer entsprechenden Rampe einer ebenfalls ringscheibenförmigen verstellbaren Rampenanordnung 50 zusammen. Diese ist im dargestellten Beispiel einstückig mit der Welle 34 ausgebildet. Darin und in weiteren Merkmalen entspricht die dargestellte Betätigungsvorrichtung derjenigen, die aus Fig.9 bis 12 der eingangs genannten EP 0 403 635 B1 bekannt ist.

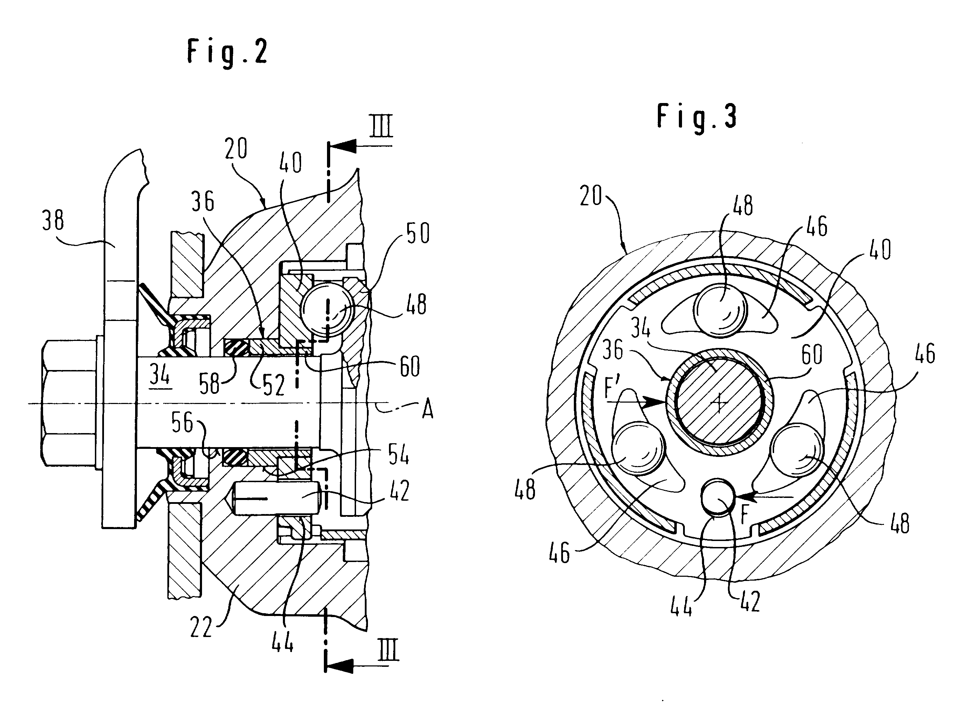

Die gegenüber der bekannten Betätigungsvorrichtung unterschiedliche Zentrierung der gehäusefesten Rampenanordnung 40 auf der Lagerbüchse 36 ist in Fig.2 und 3 näher dargestellt. Die Lagerbüchse 36 hat einen Innendurchmesser, der um ein Lagerspiel in der Größenordnung von 0,25mm größer ist als der Außendurchmesser des in der Lagerbüchse 36 gelagerten Abschnitts der Welle 34. Außen ist die Lagerbüchse 36 abgestuft; ein Abschnitt 52 größeren Außendurchmessers ist mit geringem Spiel, vorzugsweise jedoch spielfrei, in einem erweitertem Abschnitt 54 einer Stufenbohrung des Gehäusebodens 22 aufgenommen und begrenzt mit einem engeren äußeren Abschnitt 56 dieser Stufenbohrung einen Raum, in dem eine Dichtung 58 aufgenommen ist. Die Lagerbüchse 36 hat ferner einen Abschnitt 60 von geringerem Außendurchmesser, auf den die gehäusefeste Rampenanordnung 40 aufgepreßt ist.

Wenn zum mechanischen Betätigen der Bremse mittels des Hebels 8 die Welle 34, und somit auch die verstellbare Rampenanordnung 50, gedreht wird, rollen die Spreizkörper 48 in ihren Rampen 46, die in Umfangsrichtung ansteigen. Infolgedessen wird die verstellbare Rampenanordnung 50 in Richtung von der gehäusefesten Rampenanordnung 40 weg, in Fig.1 und 2 also nach rechts, gedrängt. Dabei üben die Spreizkörper 48 Reaktionskräfte auf die gehäusefeste Rampenanordnung 40 aus. Diese Reaktionskräfte lassen sich in achsparallele, die Rampenanordnung 40 gegen den Gehäuseboden 22 drückende Komponenten und in Umfangskomponenten zerlegen, deren Moment in bezug auf die Achse A der Betätigungsvorrichtung sich gemäß Fig.3 als Kräftepaar F, F' darstellen läßt. Die Kraft F wird von der Verdrehsicherung 42 aufgenommen und in den Gehäuseboden 22 abgeleitet. Die Kraft F' wird von der Lagerbüchse 36 aufgenommen und ebenfalls in den Gehäuseboden 22 abgeleitet, ohne daß die Welle 34 davon betroffen wäre.

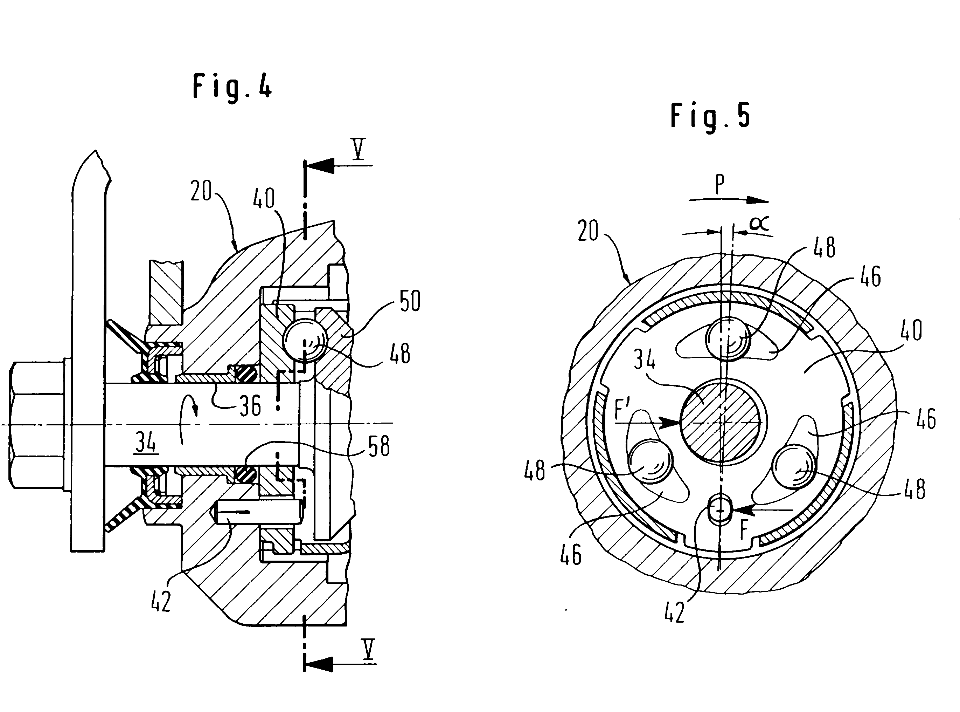

Fig.4 und 5 zeigen im Vergleich dazu die bauliche Anordnung und die sich daraus ergebenden Betriebsbedingungen bei der bekannten Betätigungsvorrichtung gemäß EP 0 403 635 B1. Auch dort wird die bei Betätigung auftretende, in Umfangsrichtung auf die Rampenanordnung 40 einwirkende Reaktionskraft F von der Verdrehsicherung 42 aufgenommen. Die gleichgroße Gegenkraft F' wirkt hingegen von der gehäusefesten Rampenanordnung 40 auf die Welle 34 und wird von dieser über die Lagerbüchse 36 auf den Gehäuseboden 22 übertragen. Wegen des unvermeidlichen Radialspiels, mit dem sich die Welle 34 durch die gehäusefeste Rampenanordnung 40 hindurcherstreckt, wird diese von der Kraft F' im Sinne des Pfeils P in Fig.5 um die Verdrehsicherung 42 geschwenkt; der Schwenkwinkel hat den Betrag _, der in der Praxis die Größenordnung von 1,5° haben kann. Infolgedessen verlagern sich die Rampen 46 der gehäusefesten Rampenanordnung 40 gegenüber den entsprechenden Rampen der verstellbaren Rampenanordnung 50, wobei besonders ungünstig ist, daß paarweise zusammengehörige Rampen nicht etwa um die zentrale Achse A sondern um die exzentrisch angeordnete Verdrehsicherung 42 gegeneinander verdreht werden und somit nicht mehr genau in der vorgesehenen Weise mit den Spreizkörpern 48 zusammenwirken können. Eine solche unerwünschte Verdrehung sowie die ebenfalls nicht wünschenswerte Einwirkung der Kraft F' auf die Welle 34 ist bei der Anordnung gemäß Fig.1 bis 3 ausgeschlossen.

## Patentansprüche

1. Betätigungsvorrichtung für eine Fahrzeugbremse, insbesondere Scheibenbremse, mit
- einem Gehäuse (20), das einen Gehäuseboden (22) aufweist,
- einer Welle (34), die im Gehäuseboden (22) gelagert und für mechanische Bremsungen drehbar ist,
- einer gehäusefesten Rampenanordnung (40), die als ringförmige Platte ausgebildet, am Gehäuseboden (22) rings um die Welle (34) abgestützt und durch eine außermittig angeordnete Verdrehsicherung (42) am Drehen gehindert ist, und
- einer drehbaren Rampenanordnung (50), die im Gehäuse (20) axial verstellbar angeordnet und mit der Welle (34) zur Übertragung eines Drehmoments verbunden ist und sich derart an der gehäusefesten Rampenanordnung (40) abstützt, daß sie ein von der Welle (34) auf sie ausgeübtes Drehmoment in eine axiale Betätigungskraft (B) umsetzt,
dadurch **gekennzeichnet**, daß die gehäusefeste Rampenanordnung (40) auf einer Lagerbüchse (36) zentriert ist, mittels der die Welle (34) im Gehäuseboden (22) gelagert ist.

2. Betätigungsvorrichtung nach Anspruch 1,
dadurch **gekennzeichnet**, daß die gehäusefeste Rampenanordnung (40) mit der Lagerbüchse (36) einen engen Sitz bildet.

3. Betätigungsvorrichtung nach Anspruch 1 oder 2,
dadurch **gekennzeichnet**, daß die Lagerbüchse (36) einen in die gehäusefeste Rampenanordnung (40) eingreifenden Abschnitt (60) kleineren Außendurchmessers und einen im Gehäuseboden (22) aufgenommenen Abschnitt (52) größeren Außendurchmessers aufweist.

## Claims

1. An actuator for a vehicle brake, especially a disc brake, comprising
- a casing (20) which has a bottom (22),
- a shaft (34) which is supported in the bottom (22) of the casing and is rotatable for mechanical brake application,
- a ramp assembly (40) which is fixed to the casing and designed as an annular plate, supported on the bottom (22) of the casing around the shaft (34), and prevented from rotating by an off-center twist stop (42), and
- a rotatable ramp assembly (50) which is arranged for axial displacement in the casing (20) and connected to the shaft (34) for torque transmission, being supported in such a manner on the ramp assembly (40) which is fixed to the casing that it converts torque applied to it by the shaft (34) into an axial actuating force (B),
**characterized** in that the ramp assembly (40) which is fixed to the casing is centered on a bearing bush (36) by which the shaft (34) is supported in the bottom (22) of the casing.

2. The actuator as claimed in claim 1,
**characterized** in that the ramp assembly (40) which is fixed to the casing establishes a tight fit with the bearing bush (36).

3. The actuator as claimed in claim 1 or 2,
**characterized** in that the bearing bush (36) comprises a portion (60) of smaller outer diameter which engages in the ramp assembly (40) being fixed to the casing and a portion (52) of greater outer diameter which is received in the bottom (22) of the casing.

## Revendications

1. Dispositif d'actionnement pour un frein de véhicule, en particulier un frein à disque, comprenant
- un boîtier (20) qui présente un fond de boîtier (22),
- un arbre (34) qui est monté tournant dans le fond de boîtier (22) et qu'on peut faire tourner pour des freinages mécaniques,
- un dispositif de rampe (40) fixe par rapport au boîtier qui a la forme d'une plaque annulaire, s'appuie en couronne autour de l'arbre (34) sur le fond de boîtier (22) et est empêché de tourner par un moyen de blocage en rotation (42) disposé excentré, et
- un dispositif de rampe (50) tournant qui est disposé mobile axialement dans le boîtier (20) et est relié à l'arbre (34) de façon à permettre la transmission d'un couple de rotation et s'appuie sur le dispositif de rampe (40) fixe par rapport au boîtier de telle façon qu'il convertisse un couple de rotation exercé sur lui par l'arbre (34) en une force d'actionnement axiale (B),
caractérisé en ce que le dispositif de rampe (40) fixe par rapport au boîtier est centré sur un coussinet (36) au moyen duquel l'arbre (34) est monté tournant dans le fond de boîtier (22).

2. Dispositif d'actionnement selon la revendication 1, caractérisé en ce que le dispositif de rampe (40) fixe par rapport au boîtier forme un ajustement étroit avec le coussinet (36).

3. Dispositif d'actionnement selon la revendication 1 ou 2, caractérisé en ce que le coussinet (36) présente une portion (60) de plus petit diamètre extérieur pénétrant dans le dispositif de rampe (40) fixe par rapport au boîtier et une portion (52) de plus grand diamètre extérieur logée dans le fond de boîtier (22).
